Europäisches Patentamt

European Patent Office

Office européen des brevets

(11) Publication number: 0 413 344 A2

# EUROPEAN PATENT APPLICATION

(21) Application number: 90115732.1

(22) Date of filing: 16.08.90

(51) Int. Cl.5: **B29C 63/18, B29C 49/24, B29C 67/18, B29C 33/12, //B29L31:10**

(30) Priority: 17.08.89 IT 2152589

(43) Date of publication of application:
20.02.91 Bulletin 91/08

(84) Designated Contracting States:
AT BE CH DE DK ES FR GB GR LI NL SE

(71) Applicant: CENTRO SVILUPPO SETTORI IMPIEGO S.r.l.
31, Foro Buonaparte
Milan(IT)

(72) Inventor: Addeo, Antonio
35, Via Scala
I-80030 San Paolo Belsito, Napoli(IT)

Inventor: Bonvini, Alberto
18, Via Quattro Venti
I-20064 Gorgonzola, Milano(IT)
Inventor: Mascia, Francesco, Dr.
1, Via Cavour
I-22070 Guanzate, Como(IT)
Inventor: Pinetti, Lucio
7, Via Do Predis
I-20155 Milano(IT)

(74) Representative: Weinhold, Peter, Dr. et al
Patentanwälte Dipl.-Ing. G. Dannenberg Dr.
P. Weinhold Dr. D. Gudel Dipl.-Ing. S.
Schubert Dr. P. Barz Siegfriedstrasse 8
D-8000 München 40(DE)

(54) Process for preparing structural, heat-insulating shaped articles and articles obtainable thereby.

(57) Described is a process for preparing structural, head-insulating shaped bodies, comprising:
(a) inserting a heat-insulating pre-moulded core into a tubular element made from an extruded thermoplastic polymer, which tubular element is at high temperature;
(b) placing said extruded tubular element containing said pre-moulded core into a blow-moulding mould;
(c) moulding said tubular element onto said pre-moulded core.

Fig. 2

# PROCESS FOR PREPARING STRUCTURAL, HEAT-INSULATING SHAPED ARTICLES AND ARTICLES OB-TAINABLE THEREBY

The present invention relates to a process for preparing structural, heat-insulating shaped articles.

More particularly, the present invention relates to a process for preparing structural, heat-insulating shaped articles and to the products obtainable thereby.

Still more particularly, the present invention relates to a process for preparing structural, heat-insulating shaped articles which does not necessarily require the use of a foamed heat-insulating material obtained by means of the use of foaming agents belonging to the class of chlorofluorocarbons.

The term "shaped article", as used herein denotes any rigid, circular or polygonal structural element for use in the fields of transportation, electrical home appliances, building industry, car industry, telecommunications, business machines, etc., such as doors, covers, cases, in particular for refrigerators or freezers, panels, containers, e.g. for portable heat-insulated bags, etc.

According to the prior art, articles of the above types are generally obtained by starting from two half-shells which are mechanically bound together by soldering or adhesive-bonding, the hollow space defined between the two half-shells being subsequently filled with foamed polyurethane.

According to another technique, disclosed in IT-A-21,815 A/87, a hollow case of thermoplastic polymer is formed by blow-moulding, and said hollow case is then filled with a polyurethane mixture, which is then foamed.

Foamed polyurethane, used as the heat-insulating material in both of the above methods, is obtained by starting from a formulation which is composed of an organic diisocyanate, a polyol, a silicone surfactant, a polymerization catalyst and a foaming agent belonging to the class of chlorofluoroalkanes, such as Freon®.

At present, the use of foamed polyurethane as heat-insulating material causes problems of environmental character, in that the foaming agents of chlorofluoroalkane type such as Freon® are regarded as one of the main causes of change and destruction of the ozone layer in the stratosphere.

Unfortunately, the problem of replacing polyurethane with an equivalent material is not easy to be solved in that this polymer, by being capable of being foamed in situ according to the well-known R.I.M. (Reaction Injection Moulding) technique, makes it possible to obtain rigid, self-supporting structural elements even if the outer case is made of thermoplastic polymer, i.e., is not in the form of a metal sheet.

This is due to the fact that polyurethane, by reacting in situ , adheres perfectly to the inner walls of the outer case, thus giving rise to the formation of a single structural body.

A process has now, surprisingly, been found which makes it possible to obtain heat-insulating structural elements by using foamed thermoplastic materials which do not necessarily require the use of chlorofluorocarbons as foaming agents, and which, compared to the products of the prior art, show the same or even better insulating characteristics at the same thickness. Simultaneously, said process makes it possible to keep the relevant technologies of production at the industrial level nearly unchanged.

A subject matter of the present invention is, therefore, a process for preparing structural, heat-insulating shaped articles, which process comprises:

(a) inserting a heat-insulating pre-moulded core into a tubular element made from an extruded thermoplastic polymer, which tubular element is at high temperature;

(b) placing said extruded tubular element containing said pre-moulded core into a blow-moulding mould; and

(c) moulding said tubular element onto said pre-moulded core.

Any thermoplastic polymers can be used for preparing the extruded tubular element. Illustrative examples thereof comprise polystyrene, impact-resistant polystyrene, polystyrene modified with polar monomers such as acrylonitrile, styrene alloys (e.g. ABS, SAN, etc.), poly(vinyl chloride), high-density polyethylene, medium-density polyethylene, low-density polyethylene, polypropylene, ethylene/propylene copolymers, acrylic and/or methacrylic resins, polymethacrylates and polyester resins such as PET, PBT, etc.

Polystyrene, impact-resistant polystyrene and styrene alloys are preferred polymers for the above purpose.

The extruded tubular element, which preferably has a circular cross-section, has a wall thickness which depends on the shape and size of the final shaped article which one wants to produce, but generally said thickness ranges from 2 to 20 mm. In order to promote the adhesion to the heat-insulated pre-moulded core and the thermoforming of the tubular element, the latter is kept at a temperature which is higher than the softening temperature of the polymer it is made from.

The heat-insulating core preferably is made of foamed polymeric material. Any foamed polymers can be used as constituents for the premoulded, heat-insulating core used in the process according to the present invention, although foamed polystyrene and foamed impact-resistant polystyrene are preferred.

The pre-moulded heat-insulating core, the shape of which reproduces the shape of the desired article can be produced by means of techniques known from the prior art, e.g., by sintering foamed or semi-foamed pellets with steam at a temperature of from about 100 to about 200°C.

Heat-insulating cores made from foamed polymers and having a honeycomb-shaped structure, as described in a technical bulletin of CIBA-GEIGY PLASTIC and marketed under the trade name HEXCEL®, can be used as well.

The tubular element containing the pore-moulded core is placed into a mould which reproduces, in negative, the shape of the said pre-moulded element.

The tubular element can be moulded onto the pre-moulded core according to several methods. One of these methods is preferably accomplished as two-step method: in the first step an outer shell is formed by blow-moulding the tubular element, and in the second step the thus obtained shell is applied onto the pre-moulded core by closing and pressing the mould against said pre-moulded core.

Another method comprises only closing the mould in order to compress and adapt the tubular element around the pre-moulded core. This operation can be accompanied by simultaneous suction of air contained inside the tubular element, in order to favour the adaptation of the thermoplastic polymer to the outline of the pre-moulded core.

Inasmuch as in both of said methods the tubular element is at a temperature which is higher than the softening temperature of the used polymer, when the mould is closed said tubular element will perfectly adhere to the premoulded core and will form an enbloc structural body with it.

An exemplifying, non-limitative practical embodiment of the process according to the present invention is shown in the drawings attached hereto, wherein:

Figure 1 shows the cross-section of a top of a laundry washing machine/dishwashing machine obtainable by the process according to the present invention; and

Figure 2 shows the tubular element of thermoplastic polymer which surrounds the pre-moulded core, placed into the interior of a blow-moulding mould.

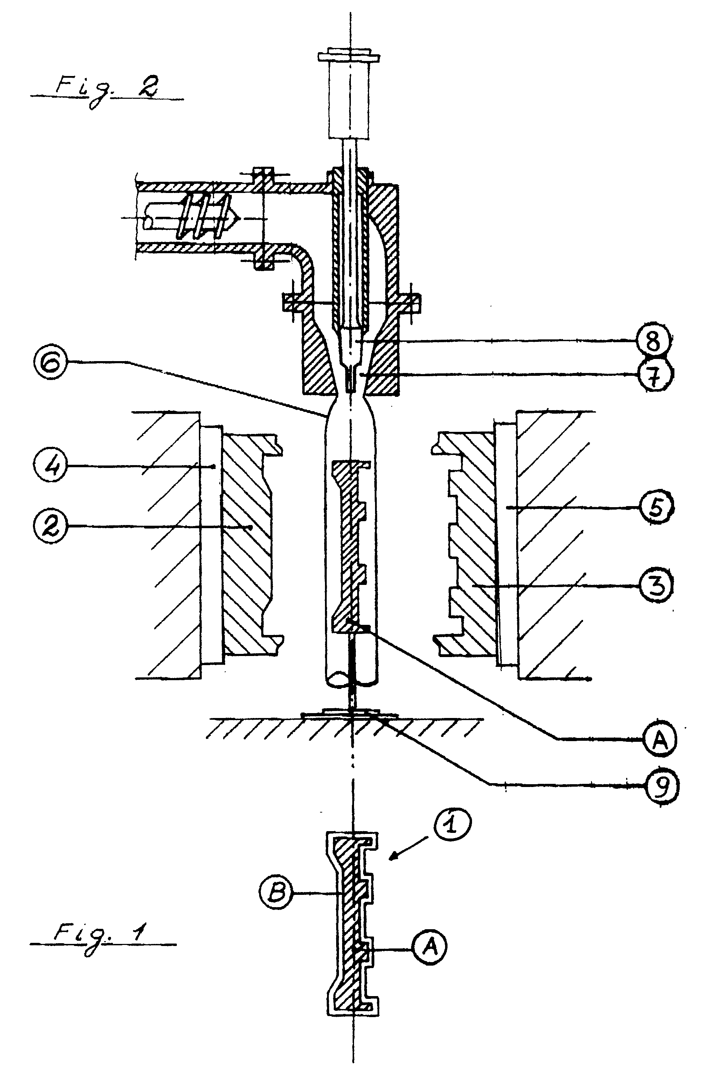

Referring to the figures, the top of the laundry washing machine/dishwashing machine (1) comprises an inner core (A) made from a heat-insulating material, for example foamed impact-resistant polystrene, and an outer shell (B), made from a compact impact-resistant polystyrene, perfectly adhering to the inner core and bound to it, so as to constitute one single, enbloc structural body.

The device for carrying out the process according to the present invention comprises a mould constituted by two half-moulds (2) and (3) mounted on respective mould-holders (4) and (5). The tubular element made from the thermoplastic polymer is extruded through an annular die (7); an axial duct (8) is provided inside the die and is used for forming the tubular element by means of the introduction of pressurized air. The tubular element surrounds the pre-moulded core (A), obtained by means of techniques known from the prior art, which reproduces the shape and the dimensions of the desired top and is kept in its desired position by means of the support (9).

When the moulding operation is carried out, an outer shell is formed by blowing air through the duct (8) into the interior of the tubular element, with the two half-moulds which constitute the mould being simultaneously closed around the core (A).

Inasmuch as the tubular element is at a temperature which is higher than the softening temperature of the polymer used, when the mould is closed the outer shell will perfectly adhere to the pre-moulded core (A), getting sealed around it and forming one single enbloc structural body with it.

## Claims

1. Process for preparing structural, heat-insulating shaped articles, which process comprises:

(a) inserting a heat-insulating pre-moulded core into a tubular element made form an extruded thermoplastic polymer, which tubular element is at high temperature;

(b) placing said extruded tubular element containing said pre-moulded core into a blow-moulding mould;

(c) moulding said tubular element onto said pre-moulded core.

2. Process according to claim 1, in which the extruded tubular element is made from polystyrene, impact-resistant polystyrene or styrene alloys.

3. Process according to any one of claims 1 and 2, in which the extruded tubular element has a circular cross-section and a wall thickness of from 2 to 20 mm.

4. Process according to any one of the preceding claims, in which the pre-moulded core is made from foamed polystyrene or foamed impact-resistant polystyrene.

5. Process according to any one of the preceding claims, in which the moulding of the tubular element onto the core is accomplished by blow-moulding and mould closure.

6. Process according to any one of claims 1 to 4, wherein the tubular element is moulded onto the pre-moulded core by means of the closure of the mould only, with the optional suction of air from the interior of the tubular element.

7. Structural, heat-insulating shaped articles, obtainable by the process according to any one of the preceding claims.

Fig. 2

Fig. 1